(19) Europäisches Patentamt
European Patent Office
Office européen des brevets

(11) Veröffentlichungsnummer: **0 228 501 B1**

(12) # EUROPÄISCHE PATENTSCHRIFT

(45) Veröffentlichungstag der Patentschrift: **22.01.92**

(51) Int. Cl.$^5$: **C02F 5/08**, C23G 1/02

(21) Anmeldenummer: **86107076.1**

(22) Anmeldetag: **24.05.86**

(54) **Flüssige Sänitärreinigungs- und Entkalkungsmittel und Verfahren zu deren Herstellung.**

(30) Priorität: **05.12.85 DE 3542970**

(43) Veröffentlichungstag der Anmeldung:
**15.07.87 Patentblatt 87/29**

(45) Bekanntmachung des Hinweises auf die Patenterteilung:
**22.01.92 Patentblatt 92/04**

(84) Benannte Vertragsstaaten:
**AT BE CH DE FR GB IT LI LU NL SE**

(56) Entgegenhaltungen:
**FR-A- 2 111 379**
**FR-A- 2 156 825**
**GB-A- 1 375 639**
**GB-A- 2 106 927**
**US-A- 4 507 219**

(73) Patentinhaber: **Joh. A. Benckiser GmbH**
**Postfach 210 167**
**W-6700 Ludwigshafen(DE)**

(72) Erfinder: **Gross, Wolfgang, Dr.**
**Ludwigshafener Strasse 20**
**W-6704 Mutterstadt(DE)**
Erfinder: **Müller, Manfred**
**Kreuzstrasse 10**
**W-6710 Frankenthal-Mörsch(DE)**
Erfinder: **Ahnsorge, Harald**
**Bad Ausee Strasse 17**
**W-6700 Ludwigshafen-Oppau(DE)**
Erfinder: **Zott, Andrea**
**Sternstrasse 174**
**W-6700 Ludwigshafen(DE)**

(74) Vertreter: **Grussdorf, Jürgen, Dr. et al**
**Patentanwälte Zellentin & Partner Rubens-strasse 30**
**W-6700 Ludwigshafen(DE)**

**EP 0 228 501 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein flüssiges Sanitärreinigungs- und Entkalkungsmittel bzw. ein Mittel zur Entfernung von Kalk- und Urinstein und dergl. welches insbesondere für die Reinigung von WC's und anderen sanitären Anlagen verwendet werden kann.

Seid langer Zeit werden als Entkalkungsmittel für sanitäre Anlagen und insbesondere WC- und Waschbeckenschüsseln wässrige Lösungen von Salzsäure oder anderen Mineralsäuren sowie Ameisensäure oder Amidosulfonsäuren verwendet.

Die bekannten flüssigen Mittel enthalten die jeweilige Säure mit einer Konzentration von etwa 5 bis 10 %. In gewissen Fällen werden auch Mischungen aus mehreren Säuren, insbesondere Salzsäure mit Phosphorsäure verwendet. Als weitere Zusätze enthalten diese Mittel säurestabile Detergentien, viskositätserhöhende Mittel (Verdicker), Farb- und Duftstoffe etc (DE-A- 23 59 095).

Diese Mittel sind sehr wirksam z.B. in der Entfernung von Kalk- und Urinsteinablagerungen sowie in der Vernichtung von Bakterien und schlechten Gerüchen, die sich vorwiegend auf den Kalk- und Urinsteinablagerungen bilden.

Die am häufigsten verwendeten relativ starken Säuren, wie die Salzsäure, die Phosphorsäure und die in neuerer Zeit immer häufiger eingesetzte Ameisensäure gehören in die Wassergefährdungsklasse 1. Phosphorsäure wirkt darüber hinaus eutrophierend. Salzsäure und Ameisensäure gelten als starke Reizstoffe für Augen, Atemwege und Scheimhaut, so daß flüssige WC-Reiniger, die diese Säuren enthalten, schon an ihrem stechenden und beißenden Geruch zu erkennen sind.

Die obengenannten Säuren lassen sich darüberhinaus nur sehr schwer parfümieren. Durch die in der Regel verwendeten Säurekonzentrationen (5-10 %) ist die Parfümierung über eine längere Zeit nicht lagerstabil. Außerdem kommen für die Parfümierungen dieser Lösungen nur wenige Einzelriechstoffe in Frage.

Es stellte sich daher die Aufgabe, Sanitärreinigungsflüssigkeiten zu entwickeln, die diese Säuren nicht oder nur noch in untergeordneter und nicht mehr störender Menge enthalten.

In der DE 28 55 822 sind Reinigungsmittel auf der Basis von organischen Poly-Carbonsäuren beschrieben, die zwar nicht in die Klasse der wassergefährdenden Stoffe gehören, auch weniger reizend auf Haut, Schleimhaut und Augen sind und auch keinen stechenden Geruch haben. Ihre Leistungen in der Entfernung von Kalk- und Urinsteinablagerungen ist jedoch unzureichend. Man hat daher versucht die Wirkung der Poly-Carbonsäuren durch Zusatz von $AlCl_3$ und $FeCl_3$ zu verbessern. Diese Maßnahme reicht jedoch für eine zuverlässige Entfernung der Ablagerungen nicht aus.

Um die Wirkung der eingesetzten Säuren zu verstärken, sind die flüssigen WC-Reiniger verdickt. Die größere Viskosität der Lösung verlangsamt das Ablaufen der Reinigungsflüssigkeit auf senkrechten oder schrägen Oberflächen und erlaubt auf diese Art eine längere Einwirkungszeit der Säuren, wodurch eine Leistungssteigerung insbesondere in der Kalkablösung erzielt wird. Da starke Säuren und Verdickungsmittel in vielen Fällen sich nicht vertragen, ist die Kombinationsmöglichkeit stark eingeschränkt.

Sehr häufig werden heutzutage zur Verdickung der Säurelösungen Nonylphenolethoxylate eingesetzt, die gleichzeitig auch als Tenside wirken. Diese Tenside, die als schlecht abbaubar gelten, müssen um wirksam zu sein, im allgemeinen in hohen Konzentrationen (6-10 %) eingesetzt werden. Ihr Ersatz durch andere umweltfreundlichere Verdickungsmittel ist daher wünschenswert.

Typische reine Verdickungsmittel wie Guarmehl, Xanthan Gum oder Jaguar sind in diesen sauren Medien nicht ausreichend lagerstabil und daher unbrauchbar. Bei moderaten Temperaturen von ca. 36° C sind diese Produkte in weniger als 1 Woche wieder dünnflüssig.

Aus der oben genannten DE-A 23 59 095 ist die Verdickung mit alkoxylierten Aminen für Reiniger auf Basis von Mineralsäuren bekannt. Da mit alkoxylierten Aminen verdickte Lösungen bei der Einarbeitung der meisten Parfümöle nach geringer Lagerzeit zu Phasentrennung neigen, ist die Verwendung relativ teurer Lösungsvermittler die Folge. Häufig muß dann in diesen Fällen das Verdickungsmittel höher dosiert werden, um die gewünschte Viskosität zu erreichen.

Aus der GB-A 2,106,927 ist ferner bekannt, organische Säuren und Tenside enthaltende Reiniger mit Celluloseethern als Verdicker zu versetzen, da die verwendeten Tenside in den untersuchten Konzentrationen selbst keine verdickende Wirkung aufweisen. Wie bereits vorstehend beschrieben, sind diese Verdicker auf die Dauer in den sauren Reinigern nicht stabil, so daß diese wieder dünnflüssig werden.

Es stellte sich daher die Aufgabe, einen flüssigen Sanitär-, insbesondere WC-Reiniger zu entwickeln, der alle wichtigen Aspekte des Umwelt- und Verbraucherschutzes berücksichtigt. Insbesondere sollen die verwendeten Rohstoffe leicht abbaubar sein und außerdem soll das Endprodukt bei eventuellen Fehlanwendungen des Verbrauchers möglichst geringe Haut-, Schleimhaut- oder Augenreizungen hervorrufen. Ferner sollten die verwendeten Mittel geruchsneutral sein, damit die Parfümierung des Endproduktes nicht negativ

beeinflußt wird. Dabei muß das Produkt leistungsfähig und preiswert sein.

Diese Aufgabe wird durch die im Hauptanspruch und den Unteransprüchen gekennzeichnete Erfindung überraschenderweise gelöst.

Wesentlicher Teil der vorliegenden Erfindung ist die Verwendung von Citronensäure. Citronensäure ist leicht abbaubar und ist kein wassergefänrdender Stoff. Außerdem ist die Citronensäure als Lebensmittel ungiftig und für den Menschen gut verträglich. Ihre kalkablösende Wirkung ist für diese Anwendung ausreichend. Die für die Verwendung in Sanitärreinigungsflüssigkeiten notwendige Verdickung der Citronensäure auf Viskositäten von mindestens 50-350 mPa vorzugsweise 100-250 mPa konnte mit den bisherigen Mitteln nicht oder nur unvollkommen erreicht werden. Es gelang jedoch, dieses Problem mit bisher für diesen Zweck nicht verwendeten Tensidverdickern, teilweise durch Kombinationen derselben zu lösen.

Anstelle der Citronensäure oder in Mischung damit können auch Dicarbonsäuren, wie z.B. Glutarsäure, Adipinsäure, Äpfelsäure, verwendet werden.

1.) Verdickung mit Alkylalkoholethersulfaten

Überraschenderweise läßt sich die Citronensäure mit Alkylalkoholethersulfaten und anorganischen, wasserlöslichen Salzen wie z.B. Natriumchlorid und Ammoniumchlorid verdicken. Bei stärkeren Säuren, wie z.B. der Salzsäure, ist das nicht möglich. Hier werden durch die größere Säurestärke die Alkylalkoholethersulfatmoleküle gespalten. Die führt zur Viskositätserniedrigung und schließlich sogar zur Phasentrennung. Wir haben Formulierungen entwickelt, die bei Lagertests von 40°C mehrere Wochen stabil blieben. Die Einsatzmengen der Alkylalkoholethersulfate liegen in der Größenordnung von 1 - 10 % vorzugsweise aber bei 2 - 6 %, die der Salze von 1-10 %.

Unter Alkylalkoholethersulfaten werden dabei Verbindungen der Formel 1

$$R - O - ((CH_2)_m - O)_n - SO_3H \qquad (1)$$

verstanden, wobei

R eine Alkylkette mit 10 - 22, vorzugsweise 14 - 18 Kohlenstoffatomen,

m eine Zahl von 2 bis 4, n eine Zahl von 1 bis 5, vorzugsweise 2 bis 3 ist.

2.) Verdickung mit amphoteren Tensiden

Sehr gute verdickende Wirkung läßt sich auch mit amphoteren Tensiden erzielen. Wegen synergistischer Effekte kann die Einsatzkonzentration der amphoteren Tenside verringert werden, wenn sie mit Aminen, alkoxylierten Aminen, Aminoxiden, alkoxylierten Aminoxiden, quaternären Aminen und nichtionischen Tensiden kombiniert werden. Die Konzentration für das amphotere Tensid liegt in der Größenordnung von 0,1 - 10 %, vorzugsweise aber bei 0,5 - 5 %. In den meisten Fällen kann durch Zugabe anorganischer Salze (0,1 - 10 %) die Viskosität gesteigert werden.

Als amphotere Tenside sind die Substanzklassen der Alkylbetaine und Alkylsulfobetaine der folgenden Formeln 2 und 3 besonders geeignet.

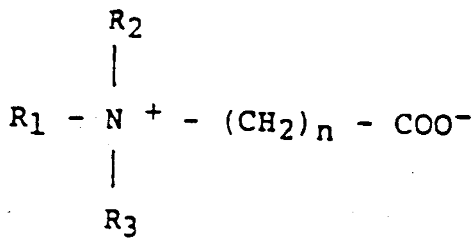

(2)

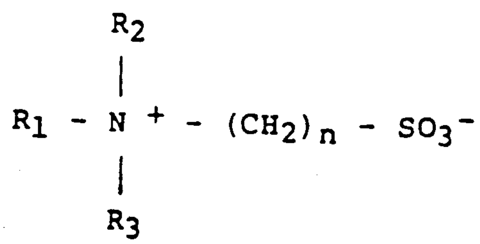

(3)

Wobei $R_1$ eine Alkylkette mit 10 - 22, vorzugsweise 14 - 18 C-Atomen darstellt

und $R_2$ und $R_3$ kurzkettige Alkylreste $(CH_2)_n$ mit n = 1 - 5 oder ethoxylierte oder propoxylierte Ketten $(CH_2CH_2O)_n$ bzw. $(CH_2 - CH(CH_3)\text{-}O)_n$ mit n = 1 - 5 bedeuten.

3.) Verdickung mit Aminoxiden

Aminoxide und ethoxylierte oder propoxylierte Aminoxide in Kombination mit Aminen führen ebenfalls zu sehr effektiver Verdickung der Endprodukte. Positiv wirkt sich hierbei noch die Zugabe von geringen Mengen nichtionischer Tenside und/oder anorganischer Salze aus.

Aminoxide, alkoxylierte Aminoxide und Amine liegen hier in Konzentrationen von 0,1 - 10 % vor, vorzugsweise aber in Konzentrationen von 0,3 - 5 %. Die Konzentrationen der nichtionischen Tenside und der anorganischen Salze liegen vorzugsweise unter 5 %.

Unter Aminoxid/alkoxylierte Aminoxide sind Verbindungen der folgenden Formel 4 zu verstehen,

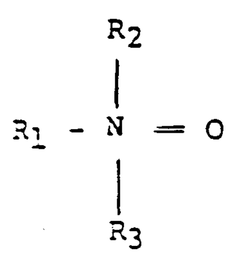

(4)

worin $R_1$ eine Alkyl-Kette mit 10 - 22, vorzugsweise aber von 12 - 18 C-Atomen bedeutet,

$R_2$ und $R_3$ gleich oder verschieden sind und H, niedere Alkylreste mit 1 - 4 C-Atomen oder ethoxylierte oder propoxylierte Ketten $(CH_2\text{-}CH(CH_3)\text{-}O)_n$ bzw. $(CH_2 - CH_2O)_n$ mit n = 1 - 5 sein können.

4. Verdickung mit Aminen

Entsprechend der Aufgabe, einen umweltschonenden WC-Reiniger zu entwickeln, sind Formulierungen mit möglichst geringem Tensidgehalt anzustreben. Bei Einsatz nichtionischer Tenside sind in der Regel unerwünscht hohe Tensidkonzentrationen notwendig. Überraschenderweise führen jedoch Kombinationen aus ethoxylierten oder propoxylierten, langkettigen Alkoholen mit ethoxylierten oder propoxylierten Aminen, quaternären Aminen und/oder ethoxylierten oder propoxylierten, quaternären Aminen bei schon geringen Einsatzmengen zu sehr viskosen Endprodukten.

Unter Amine/alkoxylierte Amine werden Verbindungen der Formel 5 verstanden,

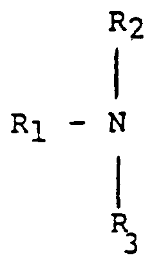

(5)

worin $R_1$ eine Alkyl-Kette mit 10 - 22, vorzugsweise 12-19 C-Atomen bedeutet,

$R_2$ und $R_3$ gleich oder verschieden sind und Alkylreste mit 1 - 4 C-Atomen oder ethoxylierte oder propoxylierte Ketten $(CH_2CH_2O)_n$ bzw. $(CH_2\text{-}CH(CH_3)\text{-}O)_n$ mit n = 1-5 darstellen.

Auch Kombinationen von zwei und mehr der o.g. Tensidtypen, führen zu dem gewünschten Erfolg. Zusätzlich können anorganische, wasserlösliche Salze, wie Natriumchlorid oder Ammoniumchlorid in Mengen von 1 - 10 %, vorzugsweise 1 - 5 % die Verdickungswirkung verstärken.

Die Konzentrationen der nichtionischen Tenside liegt in dem Bereich von 0,1 - 5 %, vorzugsweise 0,5 - 3 %, die Konzentrationen der ethoxylierten oder propoxylierten Amine , der quaternären Amine und der ethoxylierten oder propoxylierten, quaternären Ammoniumsalze im Bereich von 0,1 - 5 %, vorzugsweise 0,5 - 3 %. Auch hier kann die Viskosität häufig durch Salzzugabe noch gesteigert werden.

Unter nichtionischen oberflächenaktiven Stoffen werden hier polyalkoxylierte (z.B. polyethoxylierte oder polypropoxylierte) oberflächenaktive Stoffe verstanden, also oberflächenaktive Stoffe mit einem hydrophoben Rest verbunden mit einer polyalkoxylierten Kette. Beispiele hierfür sind: alkoxylierte Fettalkohole und alkoxylierte Fettsäuren, insbesondere aber Fettalkoholethoxylate mit einer Kette von 10 - 18 - Kohlenstroffatomen und einem Ethoxylierungsgrad (EO) von 1 bis 12, bevorzugte C-Kettenlänge 13 - 15 und Ethoxylierungsgrad 5 bis 9.

Die erfindungsgemäßen Reinigungsmittel sollen vorzugsweise als flüssige WC-Reiniger verwendet werden. Sie enthalten gegebenenfalls weitere Additive, wie Farbstoffe, Pigmente, Duftstoffe, Korrosionsinhibitoren, vorzugsweise in einer Menge von etwa o,5 Gew.-%, bezogen auf das Mittel und/oder Bakterizide, wie quaternäre Ammoniumverbindungen, z.B. Benzyldodecyltrimethylammoniumchlorid, die in einer Menge von 5 Gew.-% oder weniger, vorzugsweise 2 Gew.-% oder weniger, bezogen auf das Mittel, verwendet werden können.

Gegenstand der Erfindung ist ferner ein Verfahren zur Herstellung des beanspruchten Mittels, das darin besteht, daß man die Verdickungsmittel sowie gegebenenfalls weitere Additive unter Rühren in Wasser löst und zu dieser Lösung die Citronensäure unter Rühren zusetzt, bis die Lösung homogen ist.

Die Endviskosität des Mittels wird durch die Verdickungsmittelmenge gesteuert, das in ausreichender Menge zugesetzt wird, um die gewünschte Viskosität von 50 - 350 mPa erreichen. Die Viskosität wurde mit einem Höppler-Kugelfallviskosimeter gemessen.

Es ist möglich, Bakerizide in die Formulierung einzuarbeiten, ohne daß dadurch die Fließeigenschaften modifiziert werden.

In der folgenden Tabelle sind einige erfindungsgemäße Reinigungsmittel, welche insbesondere zur WC-Reinigung brauchbar sind, zusammengestellt.

**Formulierungsbeispiele flüssiger WC-Reiniger**

| Formulierung Nr. | 1 | 2 | 3 | 4 | 5 | 6 | 7 | 8 |
|---|---|---|---|---|---|---|---|---|
| Dicarbonsäure-Typ (Sokalan DCS) * | - | - | - | - | - | - | - | - |
| Citronensäure x $H_2O$ | 6,35 | 6,35 | 6,35 | 6,35 | 6,35 | 10,0 | 10,0 | 10,0 |
| Aluminium-Chlorid x 6 $H_2O$ | - | - | - | - | - | - | - | - |
| amphoteres Tensid (Rewoteric V 1444) * | 8 | 1,8 | 0,8 | 0,8 | 0,8 | - | - | - |
| tertiäres Amin (Armeen DMOD)* | - | - | 1,0 | - | - | 1,0 | 1,0 | - |
| ethox. Amin (Ethomeen S 12) * | - | - | - | - | 1,0 | - | - | 2,5 |
| ethox. Aminoxid (Aromax T 12)* | - | - | - | 1,23 | - | - | 1,0 | - |
| Aminoxid (WS 35) * | - | - | - | - | - | 1,0 | - | |
| Quaternäres Ammonium-Salz (Arquad S 50) * | - | - | - | - | - | - | - | |
| Nichtionisches Tensid (Dobanol 45-7") * | - | - | - | - | - | - | - | 1,0 |
| Alkylethersulfat (Genapol LRO) * | - | - | - | - | - | - | - | - |
| Elektrolyte: | | | | | | | | |
| (NaCl) | - | 3,5 | 1,5 | 1,0 | 3,0 | 5,0 | 2,0 | 4,0 |
| ($NH_4Cl$) | - | - | - | | - | - | - | - |
| Parfüm | 0,2 | 0,2 | 0,2 | 0,2 | 0,2 | 0,2 | 0,2 | 0,2 |
| Viskosität ca. mPaxs (Höppler/Glaskugel) | 220 | 105 | 216 | 300 | 174 | 190 | 140 | 160 |

* eingetragenes Warenzeichen

**Formulierungsbeispiele flüssiger WC-Reiniger**

| Formulierung Nr. | 9 | 10 | 11 | 12 | 13 | 14 | 15 |
|---|---|---|---|---|---|---|---|
| Dicarbonsäure-Typ (Sokalan DCS) * | - | - | - | - | 10,0 | 6,35 | 6,35 |
| Citronensäure x $H_2O$ | 6,35 | 6,35 | 10,0 | 6,35 | - | - | - |
| Aluminium-Chlorid x 6 $H_2O$ | 3,65 | 3,65 | - | 3,65 | 3,65 | 3,65 | 3,65 |
| amphoteres Tensid (Rewoteric V 1444) * | 0,5 | - | - | - | - | 4,0 | - |
| tertiäres Amin (Armeen DMCD) * | 1,5 | - | - | - | - | - | - |
| ethox. Amin (Ethomeen S 12) * | - | 2,0 | - | - | - | - | 4,0 |
| ethox. Aminoxid (Aromax T 12) * | - | - | - | - | - | - | - |
| Aminoxid (WS 35) * | - | - | - | - | - | - | - |
| Quaternäres Ammonium-Salz (Arquad S 50) * | - | - | - | - | - | - | - |
| Nichtionisches Tensid (Dobanol 45-7") * | - | 1,0 | - | - | - | - | 1,0 |
| Alkylethersulfat (Genapol LRO) * | - | - | 3,15 | 3,15 | 6,3 | - | - |
| Elektrolyte: | | | | | | | |
| (NaCl) | - | 1,0 | 8,0 | - | 8,0 | 2,5 | 5,0 |
| ($NH_4Cl$) | - | - | - | 2,5 | - | - | - |
| Parfüm | 0,2 | 0,2 | 0,2 | 0,2 | 0,2 | 0,2 | 0,2 |
| Viskosität ca. mPaxs (Höppler/Glaskugel) | 300 | 210 | 130 | 250 | 200 | 194 | 163 |

* eingetragenes Warenzeichen

## Patentansprüche

1. Sanitärreinigungs- und Entkalkungsmittel, enthaltend mindestens eine Säure in wäßriger Lösung sowie Verdickungsmittel und ggf. weitere Hilfsstoffe, dadurch gekennzeichnet, daß als Säure überwiegend Citronensäure und/oder eine Dicarbonsäure verwendet wird und als Verdickungsmittel

   a) ein Alkylalkoholethersulfat der Formel 1

   $$R - O - ((CH_2)_m-O)_n - SO_3H \quad (1)$$

   wobei
   R eine Alkylkette mit 10 - 22, vorzugsweise 14 - 18 Kohlenstoffatomen,
   n eine Zahl von 1 bis 5, vorzugsweise 2 bis 3 ist,

m eine Zahl von 2 bis 4 ist und ein anorganisches Salz in 0,5 - 1,5 Teilen des Alkylethersulfats
b) oder ein amphoteres Tensid der Formel 2 oder 3

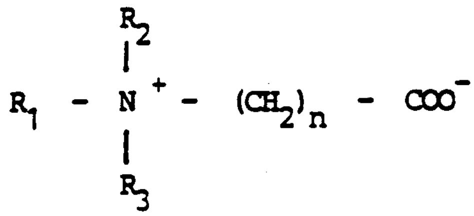

(2)

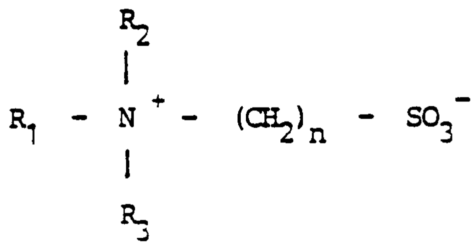

(3)

wobei $R_1$ eine Alkylkette mit 10 - 22, vorzugsweise 14 - 18 C-Atomen darstellt und $R_2$ und $R_3$ kurzkettige Alkylreste $(CH_2)_nH$ mit n = 1 - 4 oder ethoxylierte oder propoxylierte Ketten $(CH_2CH_2O)_nH$ bzw. $(CH_2 - CH(CH_3)\text{-}O)_nH$ mit n = 1 - 5 bedeuten,
c) oder Aminoxid oder alkoxiliertes Aminoxid der Formel 4

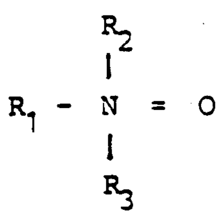

(4)

worin $R_1$ eine Alkyl-Kette mit 10 - 22, vorzugsweise aber von 12 - 18 C-Atomen bedeutet, $R_2$ und $R_3$ gleich oder verschieden sind und H, niedere Alkylreste mit 1 - 4 C-Atomen oder ethoxylierte oder propoxylierte Ketten $(CH_2CH_2O)_nH$ bzw. $(CH_2 \text{-}CH(CH_3)\text{-}O)_nH$ mit n = 1 - 5 sein können,
d) oder ein Amin oder alkoxiliertes Amin der Formel 5

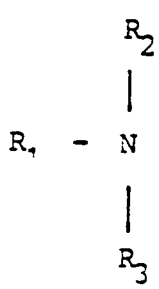

(5)

worin $R_1$ eine Alkyl-Kette mit 10 - 22, vorzugsweise 12- 19 C-Atomen bedeutet, $R_2$ und $R_3$ gleich oder verschieden sind und Alkylreste mit 1 - 4 C-Atomen oder ethoxylierte oder propoxylierte Ketten $(CH_2CH_2O)_nH$ bzw. $(CH_2\text{-}CH(CH_3)\text{-}O)_n$Hmit n = 1-5 darstellen,
ggf. auch in Kombination mit einem ethoxylierten oder propoxylierten langkettigen Alkohol

enthält, wobei die Mischung zusätzlich noch ein anorganisches, wasserlösliches Salz als zusätzlichen Verdicker enthalten kann und das Verdickungsmittel in einer derartigen Menge eingesetzt wird, daß die Endviskosität des Mittels mindestens 50 - 350 mPa beträgt.

**2.** Mittel gemäß Anspruch 1, dadurch gekennzeichnet, daß das Verdickungsmittel in einer Menge von 0,1 - 10 % eingesetzt wird.

**3.** Mittel gemäß einem der Ansprüche 1 - 2, dadurch gekennzeichnet, daß die Citronensäure in einer Menge von 5 - 10 % enthalten ist.

**4.** Mittel gemäß einem der vorhergehenden Ansprüche, dadurch gekennzeichnet, daß Citronensäure im Gemisch mit einer Dicarbonsäure enthalten ist.

**5.** Mittel gemäß einem der vorhergehenden Ansprüche, dadurch gekennzeichnet, daß als zusätzliche Hilfsstoffe Duftstoffe oder Parfüms enthalten sind.

**6.** Verwendung von Mitteln gemäß einem der vorhergehenden Ansprüche als flüssige Sanitärreinigungsmittel, insbesondere zur WC-Reinigung.

**7.** Verfahren zur Herstellung der Mittel gemäß einem der Ansprüche 1-7, dadurch gekennzeichnet, daß man die Verdickungsmittel und gegebenenfalls weitere Additive unter Rühren in Wasser löst und zu dieser Lösung die Citronensäure unter Rühren zusetzt, bis die Lösung homogenisiert ist.

**Claims**

**1.** Sanitary cleaning and descaling agent, containing at least one acid in aqueous solution, as well as thickening agents and possibly further adjuvant materials, characterised in that, as acid, there is preponderantly used citric acid and/or a dicarboxylic acid and, as thickening agent

a) an alkyl alcohol ether sulphate of the formula 1

$$R - O - ((CH_2)_m - O)_n - SO_3H \qquad (1)$$

whereby R is an alkyl chain with 10 - 22, preferably 14 - 18 carbon atoms, n is a number of 1 to 5, preferably 2 to 3, m is a number of 2 to 4, and an inorganic salt in 0.5 - 1.5 parts of the alkyl ether sulphate

b) or an amphoteric tenside of the formula 2 or 3

$$R_1 - \underset{\displaystyle R_3}{\overset{\displaystyle R_2}{\overset{|}{\underset{|}{N^+}}}} - (CH_2)_n - COO^- \qquad (2)$$

$$R_1 - \underset{\displaystyle R_3}{\overset{\displaystyle R_2}{\overset{|}{\underset{|}{N^+}}}} - (CH_2)_n - SO_3^- \qquad (3)$$

whereby $R_1$ represents an alkyl chain with 10 - 22, preferably 14 - 18 C-atoms and $R_2$ and $R_3$ signify short-chained alkyl radicals $(CH_2)_nH$ with n = 1 - 4 or ethoxylated or propoxylated chains $(CH_2CH_2O)_nH$ or $(CH_2\text{-}CH(CH_3)\text{-}O)_nH$ with n = 1 - 5,

c) or amino oxides or alkoxylated amine oxides of the formula 4

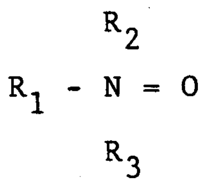 (4)

wherein $R_1$ signifies an alkyl chain with 10 - 22 but preferably 12 - 18 C-atoms, $R_2$ and $R_3$ are the same or different and can be H, lower alkyl radicals with 1 - 4 C-atoms or ethoxylated or propoxylated chains $(CH_2CH_2O)_nH$ or $(CH_2CH(CH_3)\text{-}O)_nH$ with n = 1 - 5,

d) or an amine or alkoxylated amine of the formula 5

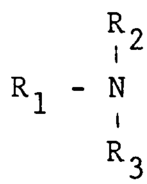 (5)

wherein $R_1$ signifies an alkyl chain with 10 - 22, preferably 12 - 19 C-atoms, $R_2$ and $R_3$ are the same or different and represent alkyl radicals with 1 - 4 C-atoms or ethoxylated or propoxylated chains $(CH_2CH_2O)_nH$ or $(CH_2CH(CH_3)\text{-}O)_nH$ with n = 1 - 5, possibly also in combination with an ethoxylated or propoxylated long-chained alcohol,

whereby the mixture can additionally also contain an inorganic, water-soluble salt as additional thickener and the thickening agent is used in such an amount that the end viscosity of the agent amounts to at least 50 - 350 mPa.

**2.** Agent according to claim 1, characterised in that the thickening agent is used in an amount of 0.1 - 10%.

**3.** Agent according to one of claims 1 - 2, characterised in that the citric acid is contained in an amount of 5 - 10%.

**4.** Agent according to one of the preceding claims, characterised in that citric acid is contained in admixture with a dicarboxylic acid.

**5.** Agent according to one of the preceding claims, characterised in that odour materials or perfumes are contained as additional adjuvant materials.

**6.** Use of agents according to one of the preceding claims as liquid sanitary cleaning agents, especially for WC cleaning.

**7.** Process for the production of the agent according to one of claims 1 - 7, characterised in that one dissolves the thickening agent and possibly further additives, with stirring, in water and adds citric acid to this solution, with stirring, until the solution is homogenised.

**Revendications**

**1.** Produit de nettoyage et de détartrage d'installations sanitaires, contenant au moins un acide en solution aqueuse ainsi que de l'agent épaississant et éventuellement d'autres substances auxilaires, caractérisé en ce que, comme acide, on utilise principalement de l'acide citrique et/ou un acide dicarboxylique et en ce qu'il contient, comme agent épaississant,

a) un éthersulfate d'alcool alkylique répondant à la formule 1

$R - O - ((CH_2)_m\text{-}O)_n - SO_3H$ (1)

dans laquelle R représente une chaîne alkylique comportant 10 à 22, de préférence 14 à 18, atomes

de carbone, n représente un nombre de 1 à 5, de préférence de 2 à 3, et m est un nombre de 2 à 4, et un sel inorganique en 0,5 à 1,5 partie de l'éthersulfate d'alcool alkylique,
b) ou un agent tensio-actif amphotère répondant à la formule 2 ou 3

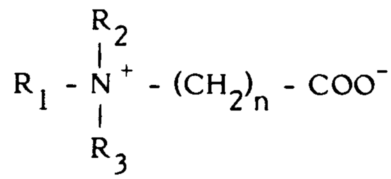 (2)

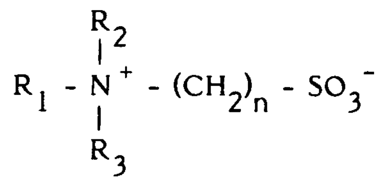 (3)

dans lesquelles $R_1$ représente une chaîne alkylique comportant 10 à 22, de préférence 14 à 18, atomes de C, et $R_2$ et $R_3$ représentent des radicaux alkyle à chaîne courte $(CH_2)_nH$, où n = 1-4, ou des chaînes éthoxylées ou propoxylées $(CH_2CH_2O)_nH$ et $(CH_2CH(CH_3)\text{-}O)_nH$, où n = 1-5,
c) ou de l'aminoxyde ou de l'aminoxyde alcoxylé répondant à la formule 4

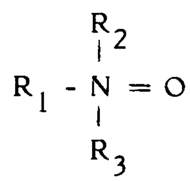 (4)

dans laquelle $R_1$ représente une chaîne alkylique comportant 10 à 22, de préférence cependant 12 à 18, atomes de C, et $R_2$ et $R_3$ sont identiques ou différents et peuvent représenter H, des radicaux alkyle inférieurs comportant 1 à 4 atomes de C ou des chaînes éthoxylées ou propoxylées $(CH_2CH_2O)_nH$ et $(CH_2CH(CH_3)\text{-}O)_nH$ où n = 1-5,
d) ou une amine ou une amine alcoxylée répondant à la formule 5

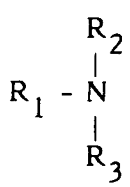 (5)

dans laquelle $R_1$ représente une chaîne alkylique comportant 10 à 22, de préférence 12 à 19, atomes de C,et $R_2$ et $R_3$ sont identiques ou différents et représentent des radicaux alkyle comportant 1 à 4 atomes de C ou des chaînes éthoxylées ou propoxylées $(CH_2CH_2O)_nH$ et $(CH_2CH\text{-}(CH_3)\text{-}O)_nH$, ou n = 1-5, éventuellement aussi en combinaison avec un alcool à longue chaîne éthoxylé ou propoxylé,

le mélange pouvant contenir encore en supplément un sel inorganique, soluble dans l'eau, comme agent épaississant supplémentaire, et l'agent épaississant étant mis en oeuvre en une quantité telle que la viscosité finale du produit est au moins de 50 à 350 mPa.

**2.** Produit suivant la revendication 1, caractérisé en ce que l'agent épaississant est mis en oeuvre en une quantité de 0,1 à 10 %.

**3.** Produit suivant l'une des revendications 1 et 2, caractérisé en ce que l'acide citrique est contenu en

une quantité de 5 à 10 %.

4. Produit suivant l'une des revendications précédentes, caractérisé en ce que l'acide citrique est contenu en mélange avec un acide dicarboxylique.

5. Produit suivant l'une des revendications précédentes, caractérisé en ce que des substances odoriférantes ou des parfums sont contenus comme substances auxiliaires supplémentaires.

6. Utilisation de produits suivant l'une des revendications précédentes, comme produits de nettoyage liquides d'installations sanitaires, en particulier pour le nettoyage de W.-C.

7. Procédé de préparation des produits suivant l'une des revendications 1 à 7, caractérisé en ce qu'on dissout dans l'eau, sous agitation, les agents épaississants et éventuellement d'autres additifs et en ce qu'à cette solution on ajoute l'acide citrique, sous agitation, jusqu'à ce que la solution soit homogénéisée.